Europäisches Patentamt

European Patent Office

Office européen des brevets

(11) Publication number: **0 196 871**
**B1**

(12) **EUROPEAN PATENT SPECIFICATION**

(45) Date of publication of patent specification: **31.10.90**

(21) Application number: **86302242.2**

(22) Date of filing: **26.03.86**

(51) Int. Cl.⁵: **B 60 K 5/04, B 60 K 17/04**

54 Automotive vehicle power train.

(30) Priority: **27.03.85 JP 62351/85**

(43) Date of publication of application:
**08.10.86 Bulletin 86/41**

(45) Publication of the grant of the patent:
**31.10.90 Bulletin 90/44**

(84) Designated Contracting States:
**DE FR GB**

(56) References cited:
**DE-A-1 948 450**
**DE-C- 934 686**
**GB-A- 623 250**
**US-A-3 327 556**

(73) Proprietor: **HONDA GIKEN KOGYO KABUSHIKI KAISHA**
**1-go, 1-ban, Minami-Aoyama 2-chome**
**Minato-ku Tokyo 107 (JP)**

(72) Inventor: **Hiramatsu, Takefumi**
**1149-69 Ohmaki**
**Urawa-shi Saitama-ken (JP)**
Inventor: **Ashikawa, Noboru**
**Tsutsujino 3-5-105 259-1 Hirose**
**Sayama-shi Saitama-ken (JP)**

(74) Representative: **Leale, Robin George et al**
**FRANK B. DEHN & CO. Imperial House 15-19**
**Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a power train in an automotive vehicle of the type defined in the preamble of claim 1.

In the design of an automotive vehicle, it is generally desired to minimize the exterior dimensions of the body thereof, while maintaining desired dimensions of the interior of the passenger compartment. This is done in order to reduce utilization of materials and manufacturing costs, and to minimize weight and frontal area, which is closely related to wind resistance, with the object of reducing fuel consumption, and also in order to facilitate parking, storage and general drivability. In other words, for a given overall length of the external dimensions of the vehicle body, it is desirable to maximize the dimensions of the interior of the passenger compartment, which concomitantly entails minimizing the dimensions of the engine compartment. Further, in modern vehicle body design, it is becoming more and more important to decrease the height of the engine compartment of the vehicle, with the aim of improving the streamlining characteristics of the shape of the vehicle body by lowering and sloping the hood line.

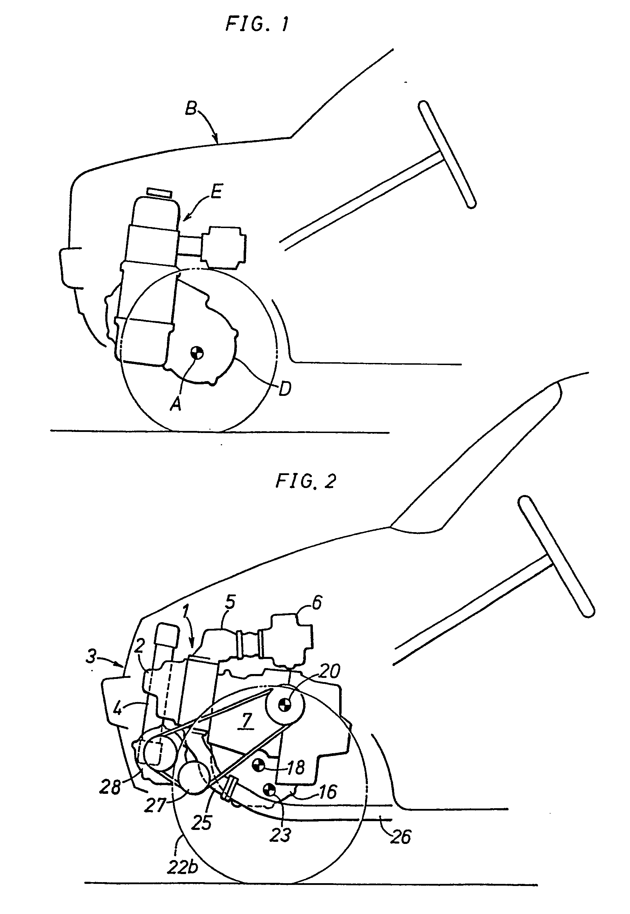

For example, in a typical prior art type configuration of a power unit in a front engine front wheel drive automotive vehicle (hereinafter referred to as an FF car), as particularly shown in Fig. 1 of the accompanying drawings which is a side view thereof, it is known to reduce the length of the engine compartment by arranging the engine E transversely of the vehicle body. Further, it is known to maximize the length of the passenger compartment of the vehicle, within the limitation of keeping the overall vehicle length constant, by further reducing the length of the engine compartment by locating a differential device D, incorporated in the power train, to the rear of the engine E so that the engine E overhangs forwardly of the center-line A of the front axle of the vehicle.

However, this construction is not entirely satisfactory, because such overhanging of the engine E forwardly of the center-line A of the vehicle front axle makes the wheel base of the vehicle shorter than it could otherwise be. Further, the center of gravity of the engine is, relative to the length of the vehicle, in front of the front wheels, which tends to increase the moments of inertia of the vehicle about its yaw and pitch axes, and also adversely affects other dynamic properties of the vehicle, such as its suspension characteristics.

According to the present invention there is provided, in an automotive vehicle comprising a body having an engine compartment, a power train comprising:

(a) an engine, comprising a crank shaft and at least one cylinder, mounted in said engine compartment with said crank shaft extending transversely of the length of the vehicle body and with said cylinder extending substantially horizontally;

(b) transmission means including a power input shaft coupled to said engine, said power input shaft being substantially coaxial with and rotationally driven from said engine crank shaft; and

(c) a differential device driven from said transmission means, the vehicle having two wheels driven from said differential device and arranged on an axle line,

characterised in that the axial center line of said differential device is located below the center line of said crank shaft, and said wheel axle is located between said center line of the crank shaft and said axial center line of the differential device, in the direction of the length of the vehicle.

With such an arrangement, since the path of power transmission from the transmission means to the differential device is arranged generally vertically, the center of gravity of the power train as a whole, including the engine, can be arranged to be generally above and close to the central axis of the driven wheels of the vehicle, i.e. the driven axle, whereby engine overhang may be minimized while the vehicle wheel base may be maximized. Accordingly, the length of the engine compartment may be minimized, thus allowing the length and roominess of the vehicle passenger compartment to be maximized while maintaining a predetermined vehicle length. Also, the moments of inertia of the vehicle as a whole about its yaw and pitch axes may be minimized, which results in various advantages with regard to vehicle handling and performance.

Furthermore, because the cylinder or cylinders of the engine are generally horizontal, it becomes possible to substantially lower the vehicle hood line, which has beneficial results with regard to vehicle streamlining, particularly in the case of an FF vehicle. Also, since it becomes practicable to locate a carburettor, an ignition system, and other frequently serviced subassemblies on top of the cylinders of the engine and thus in an easily accessible position for maintenance, the serviceability of the vehicle may be greatly enhanced by a layout according to the present invention.

An embodiment of the invention will now be described by way of example and with reference to the accompanying drawings, in which:

Fig. 1 is a side view of the engine compartment of a prior art vehicle equipped with a conventional transversely mounted power train;

Fig. 2 is a side view of the engine compartment of a vehicle having a transversely mounted power train according to the present invention;

Fig. 3 is a plan view of the engine compartment of the vehicle of Fig. 2; and

Fig. 4 is a schematic perspective view of the main parts of the power train, as seen from the upper left side of Fig. 3.

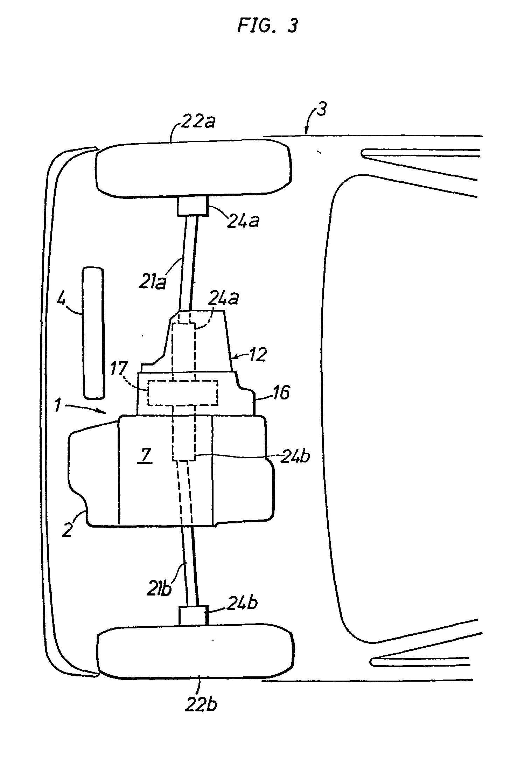

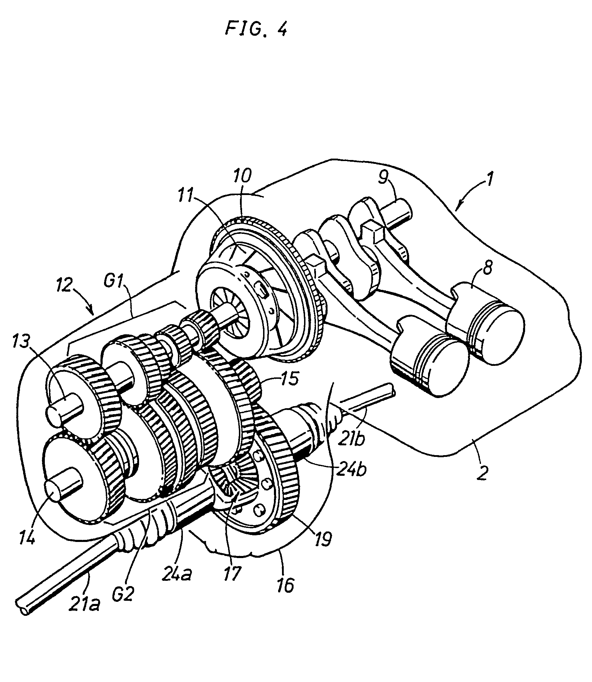

In Figures 2, 3 and 4 the reference numeral 1 denotes an internal combustion engine which has a cylinder head 2, two in line cylinders formed in a cylinder block 7 and equipped with pistons 8, a crank shaft 9, and a flywheel 10. The engine 1 is transversely mounted in the body 3 of a vehicle with its two parallel in line cylinders lying in a generally horizontal plane; the cylinder head 2 of the engine 1 is disposed towards the front of the vehicle. As best shown in Fig. 3, the engine 1 is displaced towards the left side of the vehicle body 3 from the longitudinal center line thereof, in order to accommodate a radiator 4 towards the right side of said vehicle body 3. An intake manifold 5 and a carburettor 6 are mounted above the engine cylinder head 2, so as to be easily accessible for servicing.

The reciprocating motion of the pistons 8 is converted into rotational motion of the crank shaft 9, and this motion, via the flywheel 10 secured to the end of the crank shaft 9 and a friction plate 11 of a friction clutch assembly, rotationally drives a main shaft 13 of a transmission means 12 mounted on the side of the engine 1; thus the main shaft 13 functions as the rotational power input shaft of the transmission means 12, and the transmission means 12 is connected to the engine 1 with its rotational power input member 13 substantially coaxial with the crank shaft 9 of the engine 1.

In the transmission means 12, a counter shaft or lay shaft 14 is provided generally parallel to and below the main shaft 13. A plurality of gear wheels G1 provided on the main shaft 13, and a plurality of gear wheels G2 on the lay shaft 14, are mutually and selectably meshed in a conventional manner according to the shift position of a shift lever, which is not shown in the drawings so as to provide any desired one of a plurality of transmission ratios.

Rotational power is taken out from the transmission means 12 via a power output gear wheel 15 fixed to the end of the lay shaft 14, and is supplied to a final drive or input gear wheel 19 of a conventional differential device 17, a casing 16 of which is integrally formed with the casing of the transmission means 12. The differential device 17 is coaxially received within the input gear wheel 19, and its axial center line 18 (Fig. 2) is located below the cylinder block 7, slightly forwardly of the axial center line 20 of the crank shaft 9.

A right side power output shaft of the differential device 17 is coupled to and drives a right vehicle wheel 22a via a universal joint 24a, a drive shaft 21a, and another universal joint 24a; and, similarly, a left side power output shaft of the differential device 17 is coupled to and drives a left vehicle wheel 22b via another universal joint 24b, another drive shaft 21b, and another universal joint 24b. These universal joints 24a and 24b are constant velocity joints. As shown in Fig. 2, the front axle line 23, which joins the centers of the right and left wheels 22a and 22b when the vehicle steering is pointing straight ahead, lies below the axial center line 20 of the crank shaft 9, and, with respect to the length of the vehicle, generally between said axial center line 20 of the crank shaft 9 and the axial center line 18 of the differential device 17.

Thus, because with respect to the length of the vehicle the axial center line 20 of the crank shaft 9 lies somewhat behind the front axle line 23, the center of gravity of the combination of the engine 1 and the transmission means 12 lies adjacent to said front axle line 23. Since the total weight of the engine 1 and transmission means 12 is much greater than the weight of the differential device 17, this is extremely effective in reducing the moments of inertia of the vehicle as a whole about its yaw and pitch axes.

As shown in Fig. 2, an exhaust manifold 25 is connected to the lower side of the cylinder head 2, and, after passing under one of the drive shafts 21, is connected to an exhaust pipe 26 which opens at the rear of the vehicle. This arrangement is facilitated because of the presence of a space in front of the casing 16 of the differential device 17. This space also, advantageously, accommodates various other items of accessory equipment such as an alternator 27, an air conditioning compressor 28, and so on.

Although the illustrated embodiment of the present invention is an application thereof to an FF type vehicle, the invention is not to be considered as limited thereto; in fact, the invention can also be applied to an RR (rear engine rear wheel drive) type vehicle, to a midship engined vehicle, and the like.

Thus, in the above described embodiment of the present invention, since the path of power transmission from the transmission means 12 to the differential device 17 is arranged generally vertically, the center of gravity of the power train as a whole including the engine 1 is generally above and close to the central axis 23 of the driven wheels of the vehicle, i.e. to the driven axle, whereby engine overhang is minimized while the vehicle wheel base is maximized. Accordingly, the length of the engine compartment is minimized, thus allowing the length and roominess of the vehicle passenger compartment to be maximized while maintaining a predetermined vehicle length. Furthermore, because the cylinders and pistons 8 of the engine are arranged generally horizontally, it becomes possible to substantially lower the vehicle hood line, which has beneficial effects with regard to vehicle streamlining, particularly in the case of an FF vehicle. Also, since it becomes practicable to locate the carburetor 6, the engine ignition system, and other frequently serviced subassemblies on top of the cylinders of the engine 1, and thus in an easily accessible position for maintenance, the serviceability of the vehicle as a whole is greatly enhanced by a layout according to the present invention.

It will thus be seen that the present invention, at least in its preferred forms, provides a power train in an automotive vehicle which allows the engine compartment of the vehicle to be made compact; which furthermore allows the engine compartment to be made shorter in length; which furthermore allows the passenger compartment to be made as roomy as practicable; which furthermore allows the engine compartment to be made low in height; which furthermore improves the weight distribution and general dynamic characteristics of the vehicle as a whole; and which furthermore does not limit the vehicle wheel base.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon.

## Claims

1. In an automotive vehicle comprising a body having an engine compartment, a power train comprising:

(a) an engine, comprising a crank shaft (9) and at least one cylinder, mounted in said engine compartment with said crank shaft extending transversely of the length of the vehicle body and with said cylinder extending substantially horizontally;

(b) transmission means including a power input shaft (13) coupled to said engine, said power input shaft being substantially coaxial with and rotationally driven from said engine crank shaft; and

(c) a differential device (17) driven from said transmission means, the vehicle having two wheels (22a, 22b) driven from said differential device and arranged on an axle line (23), characterised in that the axial center line (18) of said differential device is located below the center line (20) of said crank shaft, and said wheel axle line (23) is located between said center line (20) of the crank shaft and said axial center line (18) of the differential device, in the direction of the length of the vehicle.

2. A power train as claimed in claim 1, wherein said differential device (17) has two power output shafts (21a, 21b) substantially coaxial with each other and with the said axial center line (18) of the differential device.

3. A power train as claimed in claim 1 or 2, further comprising a carburettor (6) mounted to the said engine generally above said cylinder thereof.

## Patentansprüche

1. Antriebsaggregat in einem eine Karosserie mit einem Motorraum umfassenden Kraftfahrzeug, umfassend:

(a) einen Motor, umfassend eine Kurbelwelle (9) und wenigstens einen in dem Motorraum angebrachten Zylinder, wobei sich die Kurbelwelle senkrecht zur Längsrichtung des Fahrzeugkörpers erstreckt und sich der Zylinder im wesentlichen horizontal erstreckt;

(b) eine mit dem Motor gekoppelte Krafteingangswelle (13) einschließende Übertragungsmittel, wobei die Krafteingangswelle im wesentlichen koaxial zur Motorkurbelwelle angeordnet ist und von dieser drehend angetrieben ist; und

(c) eine von den Übertragungsmitteln angetriebene Differentialeinrichtung (17), wobei das Fahrzeug zwei von der Differentialeinrichtung angetriebene und auf einer Achslinie (23) angeordnete Räder (22a, 22b) aufweist,

dadurch gekennzeichnet, daß die axiale Mittellinie (18) der Differentialeinrichtung unterhalb der Mittellinie (20) der Kurbelwelle angeordnet ist und daß die Radachslinie (23) zwischen der Mittellinie (20) der Kurbelwelle und der axialen Mittellinie (18) der Differentialeinrichtung in Längsrichtung des Fahrzeugs angeordnet ist.

2. Antriebsaggregat nach Anspruch 1, worin die Differentialeinrichtung (17) zwei im wesentlichen zueinander und zur axialen Mittellinie (18) der Differentialeinrichtung koaxiale Kraftausgangswellen (21a, 21b) aufweist.

3. Antriebsaggregat nach Anspruch 1 oder 2, weiter umfassend einen an dem Motor allgemein oberhalb dessen Zylinders angebrachten Vergaser (6).

## Revendications

1. Véhicule automobile comprenant une carrosserie comportant un compartiment moteur, un groupe moteur comprenant:

(a) un moteur, comprenant un vilebrequin (9) et au moins un cylindre, qui est monté dans le compartiment moteur avec le vilebrequin s'étendant dans le sens transversal par rapport à la longueur de la carrosserie du véhicule et avec le cylindre s'étendant d'une manière pratiquement horizontale,

(b) une transmission comprenant un arbre d'entrée de transmission (13) accouplé au moteur, cet arbre d'entrée de transmission étant pratiquement coaxial au vilebrequin du moteur et étant entraîné en rotation par celui-ci, et

(c) un différentiel (17) entraîné par cette transmission, le véhicule comportant deux roues (22a, 22b) entraînées par ce différentiel et disposées suivant une ligne d'essieu (23),

caractérisé en ce que l'axe (18) du différentiel est situé audessous de l'axe (20) du vilebrequin et l'axe d'essieu (23) des roues est situé, suivant la direction de la longueur du véhicule, entre cet axe (20) du vilebrequin et cet axe (18) du différentiel.

2. Groupe moteur suivant la revendication 1, dans lequel le différentiel (17) comporte deux arbres de sortie de transmission (21a, 21b) pratiquement coaxiaux entre eux et avec l'axe (18) du différentiel.

3. Groupe moteur suivant la revendication 1 ou 2, comprenant un carburateur (6) monté sur le moteur sensiblement au-dessus du cylindre de celui-ci.

FIG. 1

FIG. 2

FIG. 3

FIG. 4